# EUROPEAN PATENT APPLICATION

(11) **EP 1 580 202 A1**
(43) Date of publication of application: **28.09.2005**
(21) Application number: 05005610.0
(22) Date of filing: 15.03.2005
(51) Int. Cl.: C08F 293/00, C09J 153/00

(54) **Acrylic block copolymer and uses thereof**

(30) Priority: 25.03.2004 JP 2004089947; 15.09.2004 JP 2004267671
(71) Applicant: NIPPON SHOKUBAI CO., LTD., Osaka 541-0043 (JP)
(72) Inventor: Hasegawa, Hiroaki, Ibaraki-shi Osaka 567-0871 (JP); Asano, Hideo, Osaka-shi Osaka 555-0013 (JP); Kai, Takashi, Toride-shi Ibaraki 302-0023 (JP)
(74) Representative: Glawe, Delfs, Moll

(57) **Abstract**

An object of the present invention is to provide an acrylic polymer which has little skin stimulating property, is excellent in balance between the adhesive strength and the cohesive strength without using a crosslinking agent, and is useful for a pressure-sensitive adhesive layer of a pressure-sensitive adhesive material to skin, a pressure-sensitive adhesive (containing the above polymer) for pressure-sensitive adhesion to skin, and a pressure-sensitive adhesive material to skin using the above pressure-sensitive adhesive. As a means of achieving this object, a polymer of the present invention is a star-shaped acrylic block copolymer obtained by polymerizing a polymerizable monomer in the presence of tri- or more-functional polyvalent mercaptan, wherein 50 to 100% by weight of a total structural unit of a polymer part is a (meth)acrylic acid alkyl ester structural part of a carbon number of 7 to 17, and an amount of remaining (meth)acrylic acid alkyl ester of a carbon number of 7 to 17 is 900 ppm or less relative to the total nonvolatile component content.

## Description

### BACKGROUND OF THE INVENTION

### A. TECHNICAL FIELD

The present invention relates to a polymer useful for a pressure-sensitive adhesive layer of a pressure-sensitive adhesive material (pressure-sensitive adhesive tape and pressure-sensitive adhesive sheet) to skin such as an adhesive plaster and a surgical tape, a pressure-sensitive adhesive (containing the above polymer) for pressure-sensitive adhesion to skin, and a pressure-sensitive adhesive material to skin obtained by using the above pressure-sensitive adhesive.

### B. BACKGROUND ART

As a pressure-sensitive adhesive used in a pressure-sensitive adhesive material (pressure-sensitive adhesive tape and pressure-sensitive adhesive sheet) to skin, a rubber-based or natural rubber-based pressure-sensitive adhesive was used in old times, but under circumstances that pressure-sensitive adhesive physical property and water steam permeability are not sufficient, and inclusion of an allergic component is problematic, in recently, an acrylic pressure-sensitive adhesive containing an acrylic polymer as a main component is becoming a mainstream.

Generally, since in a pressure-sensitive adhesive material to skin, pressure-sensitive adhesion to skin over a long term is burdened in many cases, such as fixation of a sterilized gauze or a catheter tube, balance between the adhesive strength and the cohesive strength becomes particularly important in a pressure-sensitive adhesive used in a pressure-sensitive adhesive material to skin as compared with a pressure-sensitive adhesive used in an industrial pressure-sensitive adhesive material. In an acrylic pressure-sensitive adhesive, balance between the adhesive strength and the cohesive strength is realized by crosslinking by addition of a crosslinking agent in many cases. However, since a crosslinking agent is generally toxic, there is a possibility that the crosslinking agent has adverse influence on the skin when a crosslinking agent not involved in a crosslinking reaction remains in a pressure-sensitive adhesive. For this reason, an acrylic pressure-sensitive adhesive which can realize balance between the adhesive strength and the cohesive strength without using a crosslinking agent is desired.

As an acrylic polymer which is a main component of an acrylic pressure-sensitive adhesive, an acrylic polymer obtained by polymerizing a polymerizable monomer containing, as a main component, (meth)acrylic acid alkyl ester of a carbon number of 7 to 17 is used frequently for the purpose of imparting high adhesion property. In particular, (meth)acrylic acid alkyl ester in which an alkyl group is a 2-ethylhexyl group, an octyl group, a nonyl group or a decyl group exhibits a low glass transition temperature and imparts high adhesion property when polymerized, being useful. However, these polymerizable monomers have a higher molecular weight as compared with a monomer having a small carbon number of an alkyl group, a concentration of an unsaturated double bond becomes small at a final stage of polymerization, and the monomer remains in a reaction system without being polymerized, in many cases. Furthermore, since these polymerizable monomers have a high boiling point, once remains, its amount is hardly reduced, and is hardly volatilized under drying condition upon production of a normal pressure-sensitive adhesive material to skin (adhesive plaster and surgical tape) and, when the amount is tried to be forcibly reduced by drying, there is a problem that productivity is remarkably reduced and, at the same time, an energy cost is increased. Since these (meth)acrylic acid alkyl esters of a carbon number of 7 to 17 exhibit skin stimulating property, when used in a pressure-sensitive adhesive material to skin, it is an essential theme to reduce an amount of remaining these polymerizable monomers. In addition, if an amount of remaining these polymerizable monomers is large, it adversely influences on balance between the adhesive strength and the cohesive strength.

As the prior art, an acrylic block copolymer pressure-sensitive adhesive which can exert appropriate adhering and cohering property to skin without relying on a crosslinking agent is reported (see JP-A No. 2001-181591). However, strategy for reducing a remaining monomer of (meth)acrylic acid alkyl ester of a carbon number of 7 to 17 is not considered at all.

As another prior art, a surgical pharmaceutical preparation in which an amount of a remaining monomer in a pressure-sensitive adhesive layer is adjusted at 0.2% by weight or less is reported (see JP-A No. 5-131022). However, in this technique, a monomer which remains at a large amount upon preparation of an acrylic polymer by polymerization is reduced by an additive procedure at the sacrifice of productivity and energy cost, such as high temperature heating, long time heating, and filtration separation of a polymer which are performed after polymerization, and an acrylic polymer in which a remaining monomer is reduced by polymerization is not directly obtained.

### SUMMARY OF THE INVENTION

### A. OBJECT OF THE INVENTION

An object of the present invention is to provide an acrylic polymer which is obtained by polymerizing a polymerizable monomer containing, as a main component, (meth)acrylic acid alkyl ester of a carbon number of 7 to 17, in which an amount of remaining (meth)acrylic acid alkyl ester of a carbon number of 7 to 17 is extremely small, and balance between the adhesive strength and the cohesive strength is excellent without using a crosslinking agent, and which is useful for a pressure-sensitive adhesive layer of a pressure-sensitive adhesive material to skin, a pressure-sensitive adhesive (containing the above polymer) for pressure-sensitive adhesion to skin, and a pressure-sensitive adhesive material to skin obtained by using the above pressure-sensitive adhesive.

### B. DISCLOSURE OF THE INVENTION

In order to solve the aforementioned problems, the present inventors intensively studied. As a result, the present inventors found that, upon polymerization of a polymerizable monomer containing, as a main component, (meth)acrylic acid alkyl ester of a carbon number of 7 to 17, when the polymerization is performed in the presence of tri- or more-functional polyvalent mercaptan, an amount of remaining (meth)acrylic acid alkyl ester of a carbon number of 7 to 17 is extremely small, and a polymer very excellent in balance between the adhesive strength and the cohesive strength is obtained without using a crosslinking agent. And, the present inventors continued to further study on this finding and, as a result, paid an attention to that an acrylic block copolymer obtained by performing the aforementioned polymerization of a polymerizable monomer in the presence of tri- or more-functional polyvalent mercaptan can exert the aforementioned effect due to a particular structure possessed by the polymer. That is, it is thought that an acrylic block copolymer obtained by performing the aforementioned polymerization of a polymerizable monomer in the presence of a tri- or more-functional polyvalent mercaptan is not a usual straight polymer or graft polymer, but has a star-shaped structure in which at least three chain polymer parts are radially extended around a mercapto group, and the present inventors considered that the structure brings out the aforementioned effect. Then, the present inventors continued to study paying an attention to a structure of the aforementioned acrylic block copolymer and, as a result, found that a particular star-shaped acrylic block copolymer in which a plurality of star-shaped structures in which at least three chain polymer particles are radially extended around a mercapto group are connected to each other via a chain polymer part can further enhance the aforementioned effect, that is, the effect that, even when synthesis is performed using a polymerizable monomer containing, as a main component, (meth)acrylic acid alkyl ester of a carbon number of 7 to 17, a polymer having an extremely small remaining amount thereof and is very excellent in balance between the adhesive strength and the cohesive strength is obtained without using a crosslinking agent. The present invention was completed based on these findings.

That is, a first acrylic block copolymer of the present invention is an acrylic block copolymer obtained by polymerizing a polymerizable monomer in the presence of tri- or more-functional polyvalent mercaptan, wherein 50 to 100% by weight of a total structural unit of the polymer part is a (meth)acrylic acid alkyl ester structural unit of a carbon number of 7 to 17, characterized in that an amount of remaining (meth)acrylic acid alkyl ester of a carbon number of 7 to 17 is 900 ppm or less relative to the total nonvolatile component content.

A second acrylic block copolymer of the present invention is a star-shaped acrylic block copolymer in which: plural of star-shaped structures in which at least three chain polymer parts are radially extended around a mercapto group are connected to each other via a chain polymer part, and 50 to 100% by weight of a total structural unit of the polymer part is a (meth)acrylic acid alkyl ester structural unit of a carbon number of 7 to 17, characterized in that an amount of remaining (meth)acrylic acid alkyl ester of a carbon number of 7 to 17 is 900 ppm or less relative to the total nonvolatile component content.

A pressure-sensitive adhesive for pressure-sensitive adhesion to skin of the present invention contains the acrylic block copolymer of the present invention.

A pressure-sensitive adhesive material to skin of the present invention is a pressure-sensitive adhesive material to skin in which a pressure-sensitive adhesive layer is provided on a tape-like or sheet-like substrate, wherein the pressure-sensitive adhesive layer is formed using the pressure-sensitive adhesive for pressure-sensitive adhesion to skin of the present invention.

### C. EFFECTS OF THE INVENTION

Although the acrylic block copolymer of the present invention is obtained by polymerizing a polymerizable monomer containing, as a main component, (meth)acrylic acid alkyl ester of a carbon number of 7 to 17, it is a polymer in which an amount of remaining (meth)acrylic acid alkyl ester of a carbon number of 7 to 17 is extremely small, and balance between the adhesive strength and the cohesive strength is very excellent without using a crosslinking agent. Therefore, a pressure-sensitive adhesive for pressure-sensitive adhesion to skin of the present invention containing this polymer, and a pressure-sensitive adhesive material to skin of the present invention in which a pressure-sensitive adhesive layer using the above pressure-sensitive adhesive is provided are particularly excellent in both of safety and performance.

These and other objects and advantages of the present invention will be more fully apparent from the following detailed disclosure.

### BRIEF DESCRIPTION OF THE DRAWING

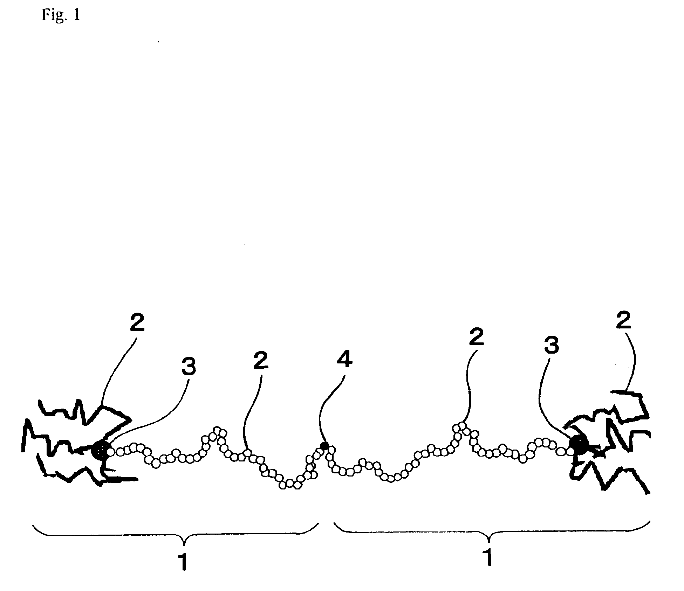

Fig. 1 is a model view of a second acrylic block copolymer of the present invention.

### [Explanation of the Symbols]

- 1:: Star-shaped structure
- 2:: Chain polymer part
- 3:: Mercapto group
- 4:: Connecting structure

### DETAILED DESCRIPTION OF THE INVENTION

The present invention will be explained in detail below, but a scope of the present invention is not restricted by the explanation and, also regarding embodiments other than embodiments exemplified below, they can be carried out by appropriate alternation in such a range that the gist of the present invention is not deteriorated.

### [Acrylic block copolymer]

A first acrylic block copolymer of the present invention is a polymer obtained by polymerizing a polymerizable monomer in the presence of tri- or more-functional polyvalent mercaptan, and 50 to 100% by weight of a total structural unit of the polymer part is a (meth)acrylic acid alkyl ester structural unit of a carbon number of 7 to 17. It is thought that such the polymer has a star-shaped structure in which at least three chain polymer parts are radially extended around a mercapto group and, by possession of the star-shaped structure, although the polymer of the present invention is obtained by polymerizing a polymerizable monomer containing, as a main component, (meth)acrylic acid alkyl ester of a carbon number of 7 to 17, a polymer having an extremely small amount of remaining (meth)acrylic acid alkyl ester of a carbon number of 7 to 17 and very excellent in balance between the adhesive strength and the cohesive strength is obtained without a crosslinking agent. In the first acrylic block copolymer of the present invention, polyvalent mercaptan and a polymerizable monomer which can be used will be described later. A method of polymerization in the first acrylic block copolymer of the present invention is not particularly limited, but the previously known method such as a radical polymerization method can be adopted. For example, a method of performing radical polymerization of a first polymerizable monomer in the presence of tri- or more-functional polyvalent mercaptan and, then, performing radical polymerization of a polymerizable monomer having a different composition from that of the first monomer can be adopted.

A preferable aspect in the first acrylic block copolymer of the present invention is that the polymer is obtained by performing multiple stage radical polymerization of a polymerizable monomer in the presence of polyvalent mercaptan, 50 to 100% by weight of a total use amount of the polymerizable monomer is (meth)acrylic acid alkyl ester of a carbon number of 7 to 17, and a polyvalent monomer is used in at least one single stage in the aforementioned multiple stages. The thus obtained acrylic block copolymer becomes a polymer having a special star-shaped structure described later among star-shaped structures, that is, a second acrylic block copolymer of the present invention, and the second acrylic block copolymer can further enhance the aforementioned effect. In addition, details of a preferable aspect in the first acrylic block copolymer of the present invention will be described later as a process for preparing a second acrylic block copolymer (a process which is particularly suitable for obtaining a second acrylic block copolymer).

The second acrylic block copolymer of the present invention is a polymer in which plural star-shaped structures in which at least three chain polymer parts are radially extended around a mercapto group are connected to each other via a chain polymer part. That is, as shown in Fig. 1 (in this figure, four chain polymer parts are radially extended around a mercapto group), the polymer is a star-shaped acrylic block copolymer in which a plurality of (in Fig. 1, two of) star-shaped structures 1 in which four chain polymer parts 2 are radially extended around a mercapto group 3 are provided, and these star-shaped structures 1 are connected via a mutual chain polymer part 2. In Fig. 1, a black circle is subjected to two star-shaped structures 1, each chain polymer part 2 of 1, and a part via 2, and this part is a connecting structure 4 derived from a polyfunctional monomer described later.

In the first and second acrylic block copolymers of the present invention, 50 to 100% by weight of a total structural unit of a polymer part (chain polymer part) possessed by an acrylic block copolymer is a (meth)acrylic acid alkyl ester structural unit of a carbon number of 7 to 17. Among a total structural unit of a polymer part (chain polymer part), a ratio of a (meth)acrylic acid alkyl ester structural unit of a carbon number of 7 to 17 to be contained is preferably 60 to 100% by weight, more preferably 70 to 100% by weight, further preferably 80 to 100% by weight, particularly preferably 90 to 100% by weight. When among a total structural unit of a polymer part (chain polymer part), a ratio of a (meth)acrylic acid alkyl ester structural unit of a carbon number of 7 to 17 to be contained is less than 50% by weight, the adhesion property cannot be sufficiently imparted.

The "(meth)acrylic acid" referred in the present invention means acrylic acid or methacrylic acid.

The "structural unit" of a polymer part referred in the present invention means a unit composed of a structure derived from a polymerizable monomer constituting a polymer.

Examples of a polymerizable monomer corresponding to a (meth)acrylic acid alkyl ester structural unit of a carbon number of 7 to 17, that is, (meth)acrylic acid alkyl ester of a carbon number of 7 to 17 include (meth)acrylic acid butyl ester, (meth)acrylic acid t-butyl ester, (meth)acrylic acid pentyl ester, (meth)acrylic acid hexyl ester, (meth)acrylic acid heptyl ester, (meth)acrylic acid octyl ester, (meth)acrylic acid isooctyl ester, (meth)acrylic acid nonyl ester, (meth)acrylic acid isononyl ester, (meth)acrylic acid decyl ester, (meth)acrylic acid undecyl ester, (meth)acrylic acid dodecyl ester, and (meth)acrylic acid 2-ethylhexylester. In order to exert more sufficiently the effect of the present invention, (meth)acrylic acid octyl ester, (meth)acrylic acid isooctyl ester, (meth)acrylic acid nonyl ester, (meth)acrylic acid decyl ester, and (meth)acrylic acid 2-ethylhexylester are more preferable, acrylic acid octyl ester, acrylic acid isooctyl ester, acrylic acid nonyl ester, acrylic acid decyl ester, and acrylic acid 2-ethylhexylester are further preferable, and acrylic acid 2-ethylhexylester is particularly preferable. These may be used alone, or two or more kinds may be used together.

A polymer part (chain polymer part) possessed by the first and second acrylic block copolymers of the present invention may contain a structural unit derived from a polymerizable monomer other than (meth)acrylic acid alkyl ester of a carbon number of 7 to 17 (other polymerizable monomer) at a ratio of less than 50% by weight of a total structural unit.

Examples of other polymerizable monomer include a polymerizable monomer which can be homopolymerized or copolymerized by radical polymerization, for example, (meth)acrylic acid alkyl ester of a carbon number of 6 or less such as methyl (meth)acrylate, and ethyl (meth)acrylate; (meth)acrylamides such as (meth)acrylamide, N-methyl(meth)acrylamide, and N-propyl(meth)acrylamide; (meth)acrylic acid; styrene-based monomer such as α-methylstyrene, vinyltoluene and styrene; maleimide-based monomer such as phenylmaleimide, and cyclohexylmaleimide; vinyl ether-based monomer such as methyl vinyl ether, ethyl vinyl ether, and isobutyl vinyl ether; fumaric acid, monoalkyl ester of fumaric acid, and dialkyl ester of fumaric acid; maleic acid, monoalkyl ester of maleic acid, and dialkyl ester of maleic acid; itaconic acid, monoalkyl ester of itaconic acid, and dialkyl ester of itaconic acid; vinylpyrrolidone such as N-vinyl-2-pyrrolidone; (meth)acrylic acid alkoxypolyalkylene glycol ester represented by the general formula (1) such as methoxytriethylene glycol acrylate, methoxypolyethylene glycol methacrylate, ethoxydiethylene glycol acrylate, and methoxypolyethylene glycol acrylate; other vinyl compound such as (meth)acrylonitrile, butadiene, isoprene, vinyl chloride, vinylidene chloride, vinyl acetate, vinyl ketone, vinylpyridine, and vinylcarbazole. 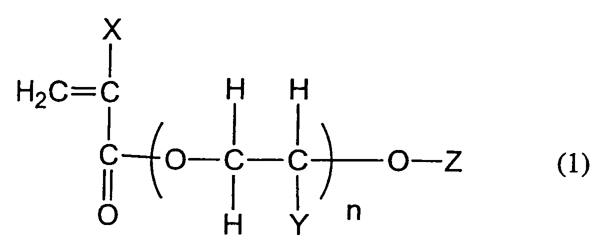 (In the general formula (1), X and Y each represents H or CH₃, Z represents an alkyl group of a carbon number of 1 to 18, and n represents an integer of 2 to 12)

In order to more sufficiently exert the effect of the present invention, it is preferable to use the methyl (meth)acrylate, (meth)acrylic acid or vinyl acetate jointly as other polymerizable monomer.

In addition, when vinylpyrrolidone such as N-vinyl-2-pyrrolidone (NVP) is used as other polymerizable monomer, skin stimulating property of the resulting star-shaped acrylic block copolymer is reduced. (Meth)acrylic acid as other polymerizable monomer can impart the cohesive strength to the resulting star-shaped acrylic block copolymer, but has strong skin stimulating property and, even when an extremely small amount thereof remains in a final product (e.g. pressure-sensitive adhesive material to skin), this becomes a cause for causing rash to a person having a sensitive skin. Vinylpyrrolidone such as N-vinyl-2-pyrrolidone has an advantage that it can impart the cohesive strength to the resulting star-shaped acrylic block copolymer, and has smaller skin stimulating property than (meth)acrylic acid.

In addition, when (meth)acrylic acid alkoxypolyalkylene glycol ester represented by the general formula (1) is used as other polymerizable monomer, moisture permeability of the resulting star-shaped acryl based block copolymer can be improved. Generally, one example of a cause for itchiness or rash of a skin due to a pressure-sensitive adhesive material to skin includes interruption of a moisture (water steam) evaporated from the skin by a pressure-sensitive adhesive in a pressure-sensitive adhesive material to skin, and capture of the moisture in the interior. (Meth)acrylic acid alkoxypolyalkylene glycol ester represented by the general formula (1) has an advantage that it can improve moisture permeability of the resulting star-shaped acrylic block copolymer, and can reduce itchiness or rush of a skin when adhering to skin as a pressure-sensitive adhesive. In order to manifest this advantage, when (meth)acrylic acid alkoxypolyalkylene glycol ester represented by the general formula (1) is contained as other polymerizable monomer, its structural unit derived from a monomer is contained at preferably 1 to 45% by weight, more preferably 10 to 40% by weight of a star-shaped acryl block copolymer total structural unit. When a content of (meth)acrylic acid alkoxypolyalkylene glycol ester represented by the general formula (1) is less than 1% by mass, there is no effect of improving moisture permeability and, when the content exceeds 45% by weight, pressure-sensitive adhesive physical property balance is disintegrated.

As other polymerizable monomer, only one kind may be used, or two or more kinds may be used jointly.

In the first and second acrylic block copolymer of the present invention, an amount of remaining (meth)acrylic acid alkyl ester of a carbon number of 7 to 17 is 900 ppm or less, preferably 700 ppm or less, more preferably 500 ppm or less, further preferably 400 ppm or less, particularly preferably 300 ppm or less, most preferably 200 ppm or less relative to the total nonvolatile component content.

By an amount of remaining (meth)acrylic acid alkyl ester of a carbon number of 7 to 17 relative to the total nonvolatile component content of 900 ppm or less, a pressure-sensitive adhesive excellent in balance between the adhesive strength and the cohesive strength can be obtained, furthermore, since skin stimulating property is extremely small, the pressure-sensitive adhesive can be very preferably applied to a pressure-sensitive adhesive for pressure-sensitive adhesion to skin and a pressure-sensitive adhesive material to skin.

The first and second acrylic block copolymers of the present invention, inter alia, the second acrylic block copolymer can manifest physical crosslinking with a microlayer separated structure due to its characteristic star-shaped block copolymer structure, and can realize balance between the adhesive strength and the cohesive strength without using a crosslinking agent.

A process for preparing the second acrylic block copolymer (hereinafter, referred to as "star-shaped acrylic block copolymer" in some cases) of the present invention may be such that 50 to 100% by weight among a total use amount of a polymerizable monomer is (meth)acrylic acid alkyl ester of a carbon number of 7 to 17, a polyfunctional monomer described later is used in at least one single stage among multiple stages, and polymerization condition may be appropriately set so that an amount of remaining (meth)acrylic acid alkyl ester of a carbon number of 7 to 17 after polymerization is 900 ppm or less relative to the total nonvolatile component content, in the previously known process for preparing a star-shaped acrylic block copolymer in which multiple stage radical polymerization of a polymerizable monomer is performed in the presence of multivalent mercaptan. A process which is particularly suitable for obtaining the star-shaped acryl based block copolymer of the present invention will be explained below.

Examples of the process which is particularly suitable for obtaining the star-shaped acrylic block copolymer of the present invention include a process of using a polyfunctional monomer described later together with a polymerizable monomer in at least one single stage in multiple stages, and further adding a polymerization initiator after completion of supply of a total polymerizable monomer to a reaction system. A polymerization initiator which is added later like this is designated as "booster".

When radical polymerization of a first polymerizable monomer is performed in the presence of multivalent mercaptan, a first polymerizable monomer is radical-polymerized starting at a mercapto group of multivalent mercaptan, and a first star-shaped structure is constructed in which at least three chain polymer parts are radially extended around a mercaptan group. Thereupon, a part of a mercapto group of polyvalent mercaptan is left without becoming a start point of this radical polymerization. Then, when a second polymerizable monomer is further added, and radical polymerization is performed, a second polymerizable monomer is radical-polymerized starting at a remaining mercapto group of polyvalent mercaptan, and a second star-shaped structure different from a first star-shaped structure is constructed. And, when a polyvalent monomer is used jointly in at least one polymerization stage upon radical polymerization which is performed at multiple stages (in the present example, 2 stages) like this, star-shaped structures obtained as described above are connected via a polyfunctional monomer, to obtain a star-shaped block copolymer. Thereupon, such the effect can be expected that a homopolymer of a polymerizable monomer produced as a byproduct at radical polymerization (chain polymer which is not produced starting at a mercapto group) is connected to a chain polymer part of a star-shaped block copolymer via a polyvalent polymer.

In order to obtain the star-shaped acrylic block copolymer of the present invention, it is particularly preferable that the aforementioned multiple stage radical polymerization method comprises two stages. That is, a process comprising a first polymerization step of performing radical polymerization of a polymerizable monomer in the presence of polyvalent mercaptan, and a second polymerization step of performing radical polymerization of a polymerizable monomer in the presence of an intermediate polymer obtained in the first polymerization step and a polyvalent monomer is particularly preferable in which 50 to 100% by weight of a total use amount of a polymerizable monomer is (meth)acrylic acid alkyl ester of a carbon number of 7 or more, and a booster is further added after supply of a total polymerizable monomer to a reaction system is completed.

In the second polymerization step, a polymerizable monomer and a polyfunctional monomer used in the second polymerization step are mixed into the polymer solution obtained in the first polymerization step, and polymerization is performed.

In the second polymerization step, polymerization may be performed by mixing the polymer solution obtained in the first polymerization step, and a polymerizable monomer and a polyfunctional monomer used in the second polymerization step at once, or a polymerizable monomer and a polyfunctional monomer used in the second polymerization step may be added to the polymer solution obtained in the first polymerization step little by little, followed by mixing.

A particularly preferable aspect of the second polymerization step is an aspect in which a polymerization initiator is added to an initial charging mixture (1) containing, as an essential component, (1a) the polymer solution obtained in the first polymerization step, (1b) a part of a polymerizable monomer used in the second polymerization step, and (1c) a part of a polyfunctional monomer used in the second polymerization step to initiate polymerization, a monomer mixture (2) containing, as an essential component, (2a) the polymer solution obtained in the first polymerization step, (2b) a remainder of a polymerizable monomer used in the second polymerization step and (2c) a remainder of a polyfunctional monomer used in the second polymerization step, and a polymerization initiator are added little by little, they are mixed (preferably addition mixing) and, after completion of addition and mixing (that is, after completion of supply of a total polymerizable monomer to a reaction system), a booster is further added later. By this process, the polymer solution obtained in the first polymerization step, and a polymerizable monomer used in the second polymerization step can be sufficiently mixed uniformly.

When a polymerization initiator is added to an initial charging mixture (1) to initiate polymerization and, thereafter, a monomer mixture (2) and a polymerization initiator are added and mixed little by little to perform polymerization, the addition and mixing are preferably according to addition dropwise. An addition dropwise time is preferably 20 to 300 minutes, more preferably 40 to 200 minutes, further preferably 60 to 120 minutes. A temperature of a reaction system when addition and mixing are formed is preferably 30 to 200°C, more preferably 50 to 150°C.

It is preferable that, in the polymer solution obtained in the first polymerization step (the aforementioned (1a) and (2a)), polymerization is stopped when the polymer solution is used in the second polymerization step, and a polymerization rate thereupon is preferably 50 to 90%, more preferably 55 to 85%, further preferably 60 to 80%. Examples of a method of stopping polymerization include a method of adding a polymerization inhibitor to the polymer solution obtained in the first polymerization step and a method of lowering the temperature of polymer solution.

Examples of the polymerization inhibitor which can be used for stopping polymerization include phenols such as hydroquinone, 2,5-bis(1,1,3,3-tetramethylbutyl)hydroquinone, 2,5-bis(1,1-dibutyl)hydroquinone, methoxyphenol, 6-tertiary-butyl-2,4-xylenol, and 3,5-ditertiary-butylcatechol; N-nitrosophenylhydroxyamine aluminum salt; phenothiazine. Only one kind of them may be used, or two or more kinds may be used jointly. Its use amount is preferably 1 to 10000 ppm, more preferably 10 to 1000 ppm, further preferably 20 to 200 ppm relative to a polymerizable monomer used in the first polymerization step. When a use amount of a polymerization inhibitor is less than 1 ppm, there is a possibility that polymerization cannot be effectively stopped. On the other hand, when the amount exceeds 10000 ppm, there is a possibility that the polymerization of the second polymerization step is not initiated.

Polymerization of the first polymerization step can be sufficiently stopped when a temperature of a polymer solution is lowered to 40°C or lower. Since a degradation rate of a polymerization initiator depends on a temperature, when a temperature of a polymer solution becomes 40°C or lower, a radical is hardly generated. In order to ensure stoppage of polymerization, a temperature of a polymer solution may be lowered to 20°C or lower.

A raw material used in a process which is suitable for preparing the star-shaped acrylic block copolymer of the present invention will be described in detail.

In a polymerizable monomer which can be used in the present invention, 50 to 100% by weight in its total use amount is (meth)acrylic acid alkyl ester of a carbon number of 7 to 17. A ratio of (meth)acrylic acid alkyl ester of a carbon number of 7 to 17 in a total polymerizable monomer is preferably 60 to 100% by weight, more preferably 70 to 100% by weight, further preferably 80 to 100% by weight, particularly preferably 90 to 100% by weight. When a ratio of (meth)acrylic acid alkyl ester of a carbon number of 7 to 17 in a total polymerizable monomer is less than 50% by weight, the adhesion property cannot be sufficiently imparted.

Preferable examples of (meth)acrylic acid alkyl ester of a carbon number of 7 to 17 include the aforementioned ones, and only one kind of them may be used, or two or more kinds may be used.

A polymerizable monomer which can be used in the present invention may contain a polymerizable monomer other than (meth)acrylic acid alkyl ester of a carbon number of 7 to 17 (other polymerizable monomer) at less than 50% by weight among a total use amount.

Examples of other polymerizable monomer include a polymerizable monomer which can be homopolymerized or copolymerized by radical polymerization, and preferable embodiments are as described above. Only one kind of them may be used, or two or more kinds may be used jointly.

In a preferable process for preparing the star-shaped acrylic block copolymer of the present invention, radical polymerization in the presence of polyvalent mercaptan is performed at multiple stages, and it is preferable to use a different kind of polymerizable monomer at each single stage. Herein, a different kind of polymerizable monomer not only means a polymerizable monomer having a different chemical structure, but also means the case where an incorporation ratio is different in a combination of polymerizable monomers having the same chemical structure. Examples of use of a different kind of polymerizable monomer at each single stage include a combination of a polymerizable monomer used in a second polymerization step consisting of 10 parts by weight of methyl methacrylate and 90 parts by weight of butyl acrylate, relative to a combination of a polymerizable monomer used in a first polymerization step consisting of 90 parts by weight of methyl methacrylate and 10 parts by weight of butyl acrylate and, in this case, since the resulting star-shaped acrylic block copolymer has chain polymer parts having greatly difference Tg, the effect of the present invention can be sufficiently exerted, and practical performance is increased.

Examples of polyvalent mercaptan which can be used in the present invention include a diester of carboxyl group-containing mercaptans and diol such as ethylene glycol and 1,4-butanediol, such as ethylene glycol dithioglycolate, ethylene glycol dithiopropionate, 1,4-butanediol dithioglycolate, and 1,4-butanediol dithiopropionate; a triester of carboxyl group-containing mercaptans and triol such as trimethylolpropane, such as trimethylolpropane trithioglycolate, and trimethylolpropane trithiopropionate; a polyester of carboxyl group-containing mercaptans and a compound having four hydroxyl groups such as pentaerythritol, such as pentaerythritol tetrakisthioglycolate, and pentaerythritol tetrakisthiopropionate; a polyester compound of carboxyl group-containing mercaptans and a compound having six hydroxyl groups such as dipentaerythritol, such as dipentaerythritol hexakisthiopropionate; and, a polyester compound of carboxyl group-containing mercaptans and a compound having three or more hydroxyl groups; a compound having three or more mercapto groups such as trithioglycerin; triazine polyvalent thiols such as 2-di-n-butylamino-4,6-dimercapto-S-triazin, and 2,4,6-trimercapto-S-triazine; a compound in which hydrogen sulfide is added to a plurality of epoxy groups of a polyvalent epoxy compound to introduce a plurality of mercapto groups; an ester compound in which a plurality of carboxyl groups of polyvalent carboxyl acid, and mercaptoethanol are esterified. Only one kind of them may be used, or two or more kinds may be used. Herein, carboxyl group-containing mercaptans refers to a compound having one mercapto group and one carboxyl group, such as thioglycolic acid, mercaptopropionic acid, and thiosalicylic acid.

A polyfunctional monomer which can be used in the present invention is a compound having two or more polymerizable unsaturated groups per molecule. A monomer in which the number of polymerizable unsaturated groups per molecule is 2 is referred to as a bifunctional monomer, and a monomer in which the number is 3 is referred to as a trifunctional monomer. From a viewpoint of binding of polymers having a star-shaped structure, it is necessary that a polyfunctional monomer which can be used in the present invention is a compound having two or more polymerizable unsaturated groups (that is, bi- or more-functional monomer). Generally, it is better that the number of polymerizable unsaturated groups is not too much, and it is preferable to use a bifunctional monomer or a trifunctional monomer. From a viewpoint of increasing the number of binding structures for binding polymers having a star-shaped structure, it is thought that a compound having four or more of polymerizable unsaturated groups is more preferable because when the number of polymerizable unsaturated groups is four or more, a polymer forms a network structure, and gelling easily occurs during polymerization.

Examples of a polyfunctional monomer which can be used in the present invention include a diester compound of (meth)acrylic acid and diol such as ethylene glycol di(meth)acrylate, polyethylene glycol di(meth)acrylate, propylene glycol di(meth)acrylate, polypropylene glycol di(meth)acrylate, 1,3-butylene glycol di(meth)acrylate, 1,6-hexanediol di(meth)acrylate, neopentyl glycol di(meth)acrylate, 2-hydroxy-1,3-di(meth)acryloxypropane, 2,2-bis[4-(acryloxyethoxy)phenyl]propane, 2,2-bis[4-(methacryloxyethoxy)phenyl]propane, 2,2-bis[4-(acryloxy-polyethoxy)phenyl]propane, 2,2-bis[4-(methacryloxy-polyethoxy)phenyl]propane, and 2-hydroxy-1-acryloxy-3-methacryloxypropane; a polyester compound of (meth)acrylic acid and a compound having three or more hydroxyl groups per molecule such as trimethylolpropane tri(meth)acrylate, tetramethylolmethane tri(meth)acrylate, tetramethylolmethane tetra(meth)acrylate, pentaerythritol tetrakis(meth)acrylate, and dipentaerythritol hexakis(meth)acrylate; allyl (meth)acrylate; divinylbenzene. Only one kind of them may be used, or two or more kinds may be used jointly.

In the present invention, a weight ratio of a polyfunctional monomer and polyvalent mercaptan (polyfunctional monomer weight/polyvalent mercaptan weight) is preferably less than 2, more preferably 0.05 to 1.5, further preferably 0.05 to 1. When this weight ratio is 2 or more, since the number of polyvalent monomers contained per molecule of a star-shaped block copolymer is too much, there is a possibility that a polymer forms a network structure, and gelling occurs during polymerization.

In the present invention, a weight ratio of a polyfunctional monomer and a polymerizable monomer (polyfunctional monomer weight/total polymerizable monomer use amount) is preferably less than 0.05, more preferably 0.001 to 0.03, further preferably 0.001 to 0.01. When this weight ratio is 0.05 or more, since a viscosity at preparation becomes too high, this is not preferable in productivity. When this weight ratio becomes further large, there is a possibility that a polymer forms a network structure, and gelling is caused during polymerization. Herein, a total polymerizable monomer use amount is a sum of a weight of a polymerizable monomer used in radical polymerization at each stage.

In the present invention, radical polymerization can be performed by bulk polymerization, solution polymerization, suspension polymerization, and emulsion polymerization which are normal radical polymerization.

A temperature when radical polymerization is performed is preferably 30 to 200°C, more preferably 50 to 150°C.

A normal polymerization initiator can be used in radical polymerization. As a polymerization initiator, for example, an azo initiator such as dimethyl-2,2'-azobis(2-methylpropionate), 2,2'-azobisisobutyronitrile, 2,2'-azobis(2-methylbutyronitrile), 2,2'-azobis(2,4-dimethylvaleronitrile) and dimethyl 2,2'-azobisisobutyrate; peroxide polymerization initiator such as benzoyl peroxide can be used. An amount of a polymerization initiator used in radical polymerization as expressed by weight ratio is preferably 1/3 or less, more preferably 1/5 or less of polyvalent mercaptan. When a polymerization initiator is used at amount more than the aforementioned ratio, a polymer extended from a polymerization initiator is produced at a large amount, in addition to a chain polymer extending from a mercapto group, productivity of a star-shaped block copolymer is easily reduced, and physical property of the resulting star-shaped block copolymer is easily reduced. When a polymerization initiator is added to a reaction system, it can be placed at once, or may be placed by division. In the case of division charging, each may be placed at once, or may be charged successively.

A normal solvent can be used in radical polymerization. Examples of the solvent include an ester series solvent such as ethyl acetate, propyl acetate and butyl acetate; a ketone series solvent such as methyl ethyl ketone and cyclohexanone; an aromatic series solvent such as benzene and toluene; a cellosolve series solvent such as methyl cellosolve and ethyl cellosolve. Only one kind of them may be used, or two or more kinds may be used jointly.

In a particularly preferable process for preparing the star-shaped acrylic block copolymer of the present invention, it is preferable that, after supply of a polymerizable monomer used in the second polymerization step (last polymerization step when three or more-staged polymerization step is included) to a total reaction system is completed, a booster is further added later.

Examples of the booster include the aforementioned polymerization initiators, and only one kind of them may be used, or two or more kinds used jointly.

An amount of the booster to be used is not particularly limited, but is preferably 0.1 to 5% by weight, more preferably 0.2 to 2% by weight, further preferably 0.3 to 1% by weight relative to an amount of a total polymerizable monomer to be used. When the amount of the booster to be used is less than 0.1 % by weight, the effect of the booster cannot be manifested and, when the amount exceeds 5% by weight, a low-molecular substance is remarkably produced to lead to reduction in physical property, being uneconomical.

A method of adding the booster is not particularly limited, but examples include a continuous adding dropwise method of continuously adding the booster dropwise, and a divided addition dropwise method of adding the booster every constant time.

A temperature when the booster is added is not particularly limited, but is preferably 30 to 200°C, more preferably 50 to 150°C.

A time of adding the booster is not particularly limited, but is preferably 1 to 10 hours, more preferably 2 to 8 hours.

After addition of the booster is completed, a reaction system may be further aged at preferably 30 to 200°C, more preferably 50 to 150°C. Specifically, aging is preferably performed under condition of refluxing of a used solvent (in the aforementioned range of a temperature). An aging time is not particularly limited, but is preferably 1 hour or longer, more preferably 2 hours or longer, further preferably 3 hours or longer. An upper limit of the aging time is not particularly limited, but usually, it is preferably within 10 hours.

In a particularly preferable process for preparing the star-shaped acrylic block copolymer of the present invention, a total time from polymerization initiation to the aforementioned aging completion in the second polymerization step is preferably 8 to 20 hours, more preferably 9 to 15 hours, further preferably 10 to 12 hours. When a total time from polymerization initiation to the aforementioned aging completion in the second polymerization step is shorter than 8 hours, the effect of the present invention cannot be sufficiently exerted in the resulting star-shaped acrylic block copolymer and, in particular, an amount of remaining (meth)acrylic acid alkyl ester of a carbon number of 7 to 17 is increased, being not preferable. When a total time from polymerization initiation to the aforementioned aging completion in the second polymerization step is longer than 20 hours, there arises a problem that productivity is remarkably reduced, and an energy cost is increased, and there is a possibility that performance of the resulting star-shaped acrylic block copolymer is reduced, being not preferable.

As a preferable process for preparing the star-shaped acrylic block copolymer of the present invention, in addition to the aforementioned process, a general process which is used in the previous process for preparing the star-shaped block copolymer may be appropriately used.

It is general that the first and second acrylic block copolymer of the present invention is obtained in a form of a polymer solution. When the first and second acrylic block copolymer is obtained in a form of a solution, the nonvolatile component content in a solution is preferably 40 to 70% by weight, more preferably 45 to 65% by weight, further preferably 50 to 60% by weight. When the nonvolatile component content in a solution is less than 40% by weight, a viscosity of a solution is reduced, and coating becomes difficult, and since an amount of a solvent to be volatilized is increased, much energy is necessary for drying, being uneconomical. When the ratio exceeds 70% by weight, since a viscosity of a solution is remarkably increased, handling becomes worse. A viscosity of a solution is preferably 1000 to 30000 mPa·s, more preferably 2000 to 20000 mPa·s, further preferably 3000 to 10000 mPa·s.

### [Pressure-sensitive adhesive for pressure-sensitive adhesion to skin]

The pressure-sensitive adhesive for pressure-sensitive adhesion to skin of the present invention contains the acrylic block copolymer of the present invention.

The pressure-sensitive adhesive for pressure-sensitive adhesion to skin of the present invention may consist of the acrylic block copolymer of the present invention alone, and from a viewpoint of easy handling, a form of a polymer solution containing the aforementioned solvent is preferable.

The pressure-sensitive adhesive for pressure-sensitive adhesion to skin of the present invention may contain the previously known additive which is used in a pressure-sensitive adhesive for pressure-sensitive adhesion to skin as other additive. For example, a plasticizer, a representative which is a polyhydric alcohol such as glycerin polyethylene glycol and polypropylene glycol, a water-soluble or water-absorbing resin, a representative which is polyacrylic acid, crosslinked polyacrylic acid, polyvinylpyrrolidone; an adhesion property imparting resin, a representative of which is a rosin-based resin, a terpene-based resin, and a petroleum-based resin, a softening agent; a filler; a pigment may be contained.

When the pressure-sensitive adhesive for pressure-sensitive adhesion to skin of the present invention is a polymer solution containing a solvent, the non-volatile component content in the solution is preferably 40 to 70% by weight, more preferably 45 to 65% by weight, further preferably 50 to 60% by weight. When the nonvolatile component content in a solution is less than 40% by weight, a viscosity of a solution is decreased, and coating becomes difficult, and since an amount of a solvent to be volatilized is increased, much energy is necessary for drying, being to be economical. When the ratio exceeds 70% by weight, since a viscosity of a solution is remarkably increased, handling at coating is deteriorated. A viscosity of a solution is preferably 1000 to 30000 mPa·s, more preferably 2000 to 20000 mPa·s, further preferably 3000 to 10000 mPa·s.

### [Pressure-sensitive adhesive material to skin]

The pressure-sensitive adhesive material to skin of the present invention is a pressure-sensitive adhesive material to skin in which a pressure-sensitive adhesive layer is provided on a tape-like or sheet-like substrate, wherein the pressure-sensitive adhesive layer is formed using the pressure-sensitive adhesive for pressure-sensitive adhesion to skin of the present invention.

The pressure-sensitive adhesive layer is not limited to an aspect in which the layer is provided directly on a tape-like or sheet-like substrate, but the layer may be provided indirectly on the substrate such as the case where an undercoating agent is coated on a tape-like or sheet-like substrate, and a pressure-sensitive adhesive layer may be provided thereon.

The tape-like or sheet-like substrate is not particularly limited as far as a pressure-sensitive adhesive layer can be provided on the substrate, but for the purpose of pressure-sensitive adhesion to skin, it is preferable that the substrate has moisture permeability.

Examples of the tape-like or sheet-like substrate include a urethane-based polymer such as polyether urethane and polyester urethane; an amide-based polymer such as polyether polyamide block copolymer; an acrylic polymer such as polyacrylic acid ester; a polyolefin-based polymer such as polyethylene, polypropylene and ethylene/vinyl acetate copolymer; a polyester-based polymer such as polyether polyester, and polyethylene terephthalate. Among them, a urethane-based polymer and an amide-based polymer are preferable in that they have water steam permeability.

The tape-like or sheet-like substrate, only one kind, or a laminate in which two or more kinds of substrates are laminated may be used.

A thickness of the tape-like or sheet-like substrate may be appropriately selected depending on utility thereof, and is preferably 5 to 100 µm, more preferably 10 to 100 µm, further preferably 10 to 80 µm, particularly preferably 20 to 60 µm.

As the tape-like or sheet-like substrate, the previously known porous film which has water steam permeability and no water permeability may be used.

Examples of a substrate which is suitable in a porous film include a porous plastic film composed of a polyolefin-based monomer such as polyethylene, polypropylene, and ethylene/vinyl acetate copolymer.

A thickness of a pressure-sensitive adhesive layer may be appropriately selected depending on utility thereof, and is preferably 5 to 100 µm, more preferably 10 to 100 µm, further preferably 10 to 80 µm, particularly preferably 20 to 60 µm. When a thickness of a pressure-sensitive adhesive layer is less than 5 µm, there is a possibility that sufficient pressure-sensitive adhesion property to skin cannot be exerted. When a thickness of a pressure-sensitive adhesive layer exceeds 100 µm, sufficient water steam permeability as a whole pressure-sensitive adhesive material to skin is hardly manifested, and a problem of stagnation of a steam, and a problem of reduction in pressure-sensitive adhesion property to skin at sweating is easily caused.

In the pressure-sensitive adhesive material to skin of the present invention, preferably, an amount of remaining (meth)acrylic acid alkyl ester of a carbon number of 7 to 17 in a pressure-sensitive adhesive layer is 500 ppm or less, more preferably 400 ppm or less, further preferably 300 ppm or less, particularly preferably 200 ppm or less, most preferably 100 ppm or less relative to the total nonvolatile component content. In the pressure-sensitive adhesive material to skin of the present invention, since an amount of remaining (meth)acrylic acid alkyl ester of a carbon number of 7 to 17 in a pressure-sensitive adhesive layer is extremely small like this, there is little skin stimulating property even when used for a long term, the pressure-sensitive adhesive material to skin is also excellent in balance between the adhesive strength and the cohesive strength.

The pressure-sensitive adhesive material to skin of the present invention may be subjected to treatment which is performed upon preparation of the previously known pressure-sensitive adhesive material to skin, or may contain an additive contained in the previously known pressure-sensitive adhesive material to skin.

### DETAILED DESCRIPTION OF THE PREFERRED EMBODIMENTS

The present invention will be explained more specifically below by way of Examples and Comparative Examples, but the present invention is not limited to them. Hereinafter, for convenience, "part by weight" is simply described as "part", and "liter" is simply described as "L" in some cases. In addition, "% by weight" is described as "wt%" in some cases.

A measurement method and an assessment method in Examples and Comparative Examples will be shown below.

### <Viscosity measurement>

A viscosity was measured at 25°C using a B-type viscometer. A rotation number was 12 rotations per minute.

### <Nonvolatile component content measurement>

A nonvolatile component content was calculated by a change in a weight by drying under 200°C × 15 minutes in a hot air circulating drier.

### <Remaining monomer amount measurement>

The amount was obtained by gas chromatography. Main condition is as follows:
Measurement instrument: GC14A manufactured by Shimadzu Corporation
Column: capillary column (HiCap-CBP5, Middle Bore manufactured by Shimadzu Corporation)
Carrier gas; helium
Detector: FID
Injection temperature: 200°C
Detector temperature: 250°C

### <Preparation of pressure-sensitive adhesive tape for pressure-sensitive adhesive physical property test>

A pressure-sensitive adhesive was coated on one side of a releasing paper (trade name: SL70S manufactured by Kaito Chemical Industry Co., Ltd.) at a thickness after drying of 40 µm, this was dried at 75°C for 30 seconds in a hot air circulating drier, and dried at 100°C for 30 seconds in an adjacent another hot air circulating drier and, thereafter, a pressure-sensitive adhesive was stuck on one side of polyethylene terephthalate (hereinafter, abbreviated as PET) having a thickness of 25 µm, and this was allowed to stand overnight, which was used as the pressure-sensitive adhesive tape for the pressure-sensitive adhesive physical property test.

### <Pressure-sensitive adhesive physical property test>

### (1) Initial adhesive strength measurement

Measurement was performed under the atmosphere of a temperature of 23°C and a relative humidity of 65%.

A test piece of the pressure-sensitive adhesive tape for the pressure-sensitive adhesive physical property test having a width of 25 mm was placed on a stainless steel plate (SUS304: hereinafter, abbreviated as SUS plate in some cases) and a bakelite plate which are an adherend, and a rubber roller having a weight of 2 kg went and came back once on this test piece to stick the piece. 25 minutes after this sticking, one end of the test piece was peeled at a rate of 300 mm/min in a 180° direction, and a strength at that time was measured, which was used as an initial adhesive strength (N/cm).

### (2) Holding power measurement

Measurement was performed under the atmosphere of a temperature of 23°C and a relative humidity of 65%.

A test piece of the pressure-sensitive adhesive tape for the pressure-sensitive adhesive physical property test was stuck on a SUS plate which is an adherend so that the sticking area became 25 mm x 25 mm and, after 25 minutes, a temperature was raised to 50°C, which was allowed to stand. After allowed to stand for 20 minutes, a load of 1 kg was applied, and a time until a test piece fell (hour) or a slippage (mm) of a test piece after 24 hours were measured.

When a test piece is not fallen, as a measured value is smaller (a slippage width is smaller), the holding power is excellent and, when a test piece was fallen, as a measured value (hour) is larger, the holding power is excellent.

### (3) Ball tack measurement

Measurement was performed under the atmosphere of a temperature of 23°C and a relative humidity of 65%.

Ball tack was measured using the pressure-sensitive adhesive tape for the pressure-sensitive adhesive physical property test and using an inclination ball tack apparatus. An approach run path and an adhesive side measuring part were 100 mm, respectively, and an inclination angle was 30°.

As a measured value is smaller (a ball is smaller), tack property is deteriorated.

### <Preparation of pressure-sensitive adhesive tape for pressure-sensitive adhesion test to skin>

In the aforementioned preparation of the pressure-sensitive adhesive tape for the pressure-sensitive adhesive physical property test, a polyurethane film (trade name: Mobilon film MF50-T manufacture by Nisshinbo Industries, Inc.) having a thickness of 50 µm was used in place of polyethylene terephthalate having a thickness of 25 µm, and this was used as the pressure-sensitive adhesive tape for the pressure-sensitive adhesion test to skin.

### <Pressure-sensitive adhesion test to skin>

### (1) Adhesion property test to skin

The pressure-sensitive adhesive tape for the pressure-sensitive adhesion test to skin was stuck on an inner side part of an upper arm of ten healthy persons for 24 hours, the adhesion property to skin was determined by observation with naked eyes, and the adhesion property to skin was expressed by an average value of points.
4 points: no peeling
3 points: little peeling
2 points: little peeling at an end
1 point: peeling at an end

### (2) Skin stimulating property test

When the pressure-sensitive adhesive tape for the pressure-sensitive adhesion test to skin was stuck on an inner side part of an upper arm of ten healthy persons for 24 hours, whether itchiness or a pain was felt or not was questioned, and stimulating property was expressed by an average value of points.
4 points: no problem
3 points: Slight itchiness was felt.
2 points: Itchiness was felt.
1 point: Pain was felt.

### (3) Paste remaining property test

After the pressure-sensitive adhesive tape for the pressure-sensitive adhesion test to skin was stuck on an inner side part of an upper arm of ten healthy persons for 24 hours, the tape was peeled, and whether a pressure-sensitive adhesive remained on a skin or not was determined by observation with naked eyes, and paste remaining property was expressed by an average value of points.
4 points: No paste remaining.
3 points: Partial paste remaining
2 points: Paste remaining
1 point: Paste remaining of whole surface

### <Preparation of pressure-sensitive adhesive tape for moisture permeability test>

A pressure-sensitive adhesive was coated on one side of a releasing paper (trade name: SL70S manufactured by Kaito Chemical Industry Co., Ltd.) at a thickness after drying of 40 µm, this was dried at 75°C for 30 seconds in a hot air circulating drier, and dried at 100°C for 30 seconds in an adjacent another hot air circulating drier and, thereafter, a pressure-sensitive adhesive was stuck on one side of a polyurethane film (trade name: Mobilon film MF30-T manufactured by Nisshinbo Industries, Inc.) having a thickness of 30 µm, and this was allowed to stand overnight, which was used as the pressure-sensitive adhesive tape for the moisture permeability test.

### <Moisture permeability test>

The pressure-sensitive adhesive tape for the moisture permeability test was used and, as a method of assessing moisture permeability of a pressure-sensitive adhesive tape to be stuck on a skin, a water method (A-2 method) of JIS L1099, a change in a weight was measured in 1 mg unit every one hour, and a moisture permeability amount in terms of 24 hours was obtained. A temperature at measurement was 40±2°C, a humidity was 50±5% RH and, as a film substrate, a polyurethane film (trade name: Mobilon film MF30-T manufactured by Nisshinbo Industries, Inc.) of 30 µm was used.

As a control experiment, moisture permeability of a polyurethane film (trade name: Mobilon film MF30-T manufactured by Nisshinbo Industries, Inc.) was 980 g/m²·24h.

### [Example 1]

### (First polymerization step)

A four-neck flask equipped with a thermometer, a stirrer, an inert gas introducing tube, a refluxing condenser and an addition funnel was charged with 24 parts of methyl methacrylate (hereinafter, abbreviated as MMA), 1.2 parts of dipentaerythritol-β-mercaptopropionate (hereinafter, abbreviated as DPMP), and 24.82 parts of ethyl acetate as a solvent.

The mixture was stirred under a nitrogen stream, a temperature was retained at 83±2°C, and 0.048 part of timethyl-2,2'-azobis(2-methylpropionate) (trade name: V-601 manufactured by Wako Pure Chemical Industries, Ltd.) (hereinafter, abbreviated as V-601) as a polymerization initiator, and 0.432 part of ethyl acetate as a dissolution solvent were added to initiate polymerization.

30 minutes after initiation of a polymerization reaction, a mixture of 56 parts of MMA and 15.25 parts of ethyl acetate was added dropwise over 120 minutes, a V-601 solution (a mixture of 0.084 part of V-601, 2.8 parts of DPMP and 2.8 parts of ethyl acetate) was added dropwise over 90 minutes, and a polymerization reaction was performed while controlling an inner temperature under refluxing.

After completion of addition dropwise of the mixture of 56 parts of MMA and 15.25 parts of ethyl acetate, 2 parts of ethyl acetate was added, and a reaction was further performed for 130 minutes.

Thereafter, a polymerization initiator solution (a mixture of 0.04 part of hydroquinone monomethyl ether and 0.36 part of ethyl acetate) and 38.431 parts of ethyl acetate for dilution were added, and this was cooled to obtain an intermediate polymer solution (A1).

The intermediate polymer solution (A1) had a nonvolatile component content of 34.5% by weight and a viscosity of 90 mPa·s.

### (Second polymerization step)

A four-neck flask equipped with a thermometer, a stirrer, an inert gas introducing tube, a refluxing condenser and an addition funnel was charged with 60.9 parts of the intermediate polymer solution (A1) obtained in the first polymerization step, 82.5 parts of butyl acrylate (hereinafter, abbreviated as BA), 89.78 parts of2-ethylhexyl acrylate (hereinafter, abbreviated as 2EHA), 7.18 parts of acrylic acid (hereinafter, abbreviated as AA), 0.09 part of tetraethylene glycol diacrylate (trade name: NK ester A-200 manufactured by Shin-Nakamura Chemical Co., Ltd.) (hereinafter, abbreviated as TEGDA), and 170 parts of ethyl acetate as a solvent.

The mixture was stirred under a nitrogen stream, a temperature was retained at 86±2°C, and a V-601 solution (a mixture of 0.336 part of V-601 and 10 parts of ethyl acetate) as a polymerization initiator was added to initiate polymerization.

10 minutes after initiation of a polymerization reaction, a mixture of 142.1 parts of the intermediate polymer solution (A1), 162.58 parts of BA, 209.48 parts of 2EHA, 16.76 parts of AA, 29.93 parts of vinyl acetate (hereinafter, abbreviated as VA), 0.21 part of TEGDA, and 176 parts of ethyl acetate, and a V-601 solution (a mixture of 0.784 part of V-601 and 40 parts of ethyl acetate) were added dropwise over 80 minutes, respectively, and a polymerization reaction was performed while controlling an inner temperature under refluxing.

After completion of addition dropwise, 10 parts of ethyl acetate was added, and a reaction was further performed for 60 minutes.

Thereafter, each 12 division of a V-601 solution (a mixture of 1.68 parts of V-601 and 40 parts of ethyl acetate) as a booster was added dropwise every 30 minutes, and a reaction was further continued for 120 minutes under refluxing.

Thereafter, 100 parts of ethyl acetate as a dilution solvent was added, and this was cooled to obtain a polymer solution (B1).

The polymer solution (B1) had a nonvolatile component content of 53.3% by weight, a viscosity of 8220 mPa·s, and 256 ppm (relative to the nonvolatile component content) of remaining 2EHA.

### (Preparation of pressure-sensitive adhesive)

10 parts of a terpenephenol resin (trade name: YS Polystar T100 manufactured by Yasuhara Chemical Co., Ltd.), and 10 parts of ethyl acetate for adjusting a viscosity relative to 100 parts of the nonvolatile component content of the polymer solution (B1) were mixed to obtain a pressure-sensitive adhesive (C1).

### (Measurement and assessment)

Regarding the pressure-sensitive adhesive (C1), an initial adhesive strength, a holding power, and ball tack were measured, and adhesion property to skin, skin stimulating property, and paste remaining property were assessed according to the aforementioned measurement and assessment method. And, a content of 2EHA remaining in the pressure-sensitive adhesive tape for the pressure-sensitive adhesive physical property test was measured.

Results are shown in Table 4.

### [Examples 2 to 13]

According to the same manner as that of Example 1 except that a monomer composition and reaction condition were changed as shown in Tables 1 to 3 in Example 1, intermediate polymer solutions (A2) to (A13), polymer solutions (B2) to (B13), and pressure-sensitive adhesives (C2) to (C13) were obtained.

Results of various measurements regarding polymer solutions (B2) to (B 13) are shown in Tables 1 to 3, and results of various measurements and assessments regarding pressure-sensitive adhesives (C2) to (C13) are shown in Tables 5 to 6.

Upon preparation of a polymer solution (B9), methoxytriethylene glycol acrylate (trade name: AM-30G manufactured by Shin-Nakamura Chemical Co., Ltd.) was used as a hydrophilic monomer, upon preparation of polymer solutions (B10) and (B13), methoxypolyethylene glycol methacrylate (trade name: M-90G manufactured by Shin-Nakamura Chemical CO., Ltd.) was used as a hydrophilic monomer, upon preparation of a polymer solution (B11), ethoxydiethylene glycol acrylate (trade name: V#190 manufactured by Osaka Organic Chemical Industry Ltd.) was used as a hydrophilic monomer, and upon preparation of a polymer solution (B12), methoxypolyethylene glycol acrylate (trade name: AM-90G manufactured by Shin-Nakamura Chemical Co., Ltd.) was used as a hydrophilic monomer.

In Examples 8 to 13, excellent low skin stimulating property was exhibited, and results of very excellent adhesion property to skin and paste remaining property were obtained. In addition, in Examples 9 to 13, since a hydrophilic monomer was used, a numerical value of very high moisture permeation was exhibited.

### [Comparative Example 1]

According to the same manner as that of Example 1 except that a monomer composition and reaction condition were changed as shown in Table 4 in Example 1, an intermediate polymer solution (D1), a polymer solution (E1), and a pressure-sensitive adhesive (F1) were obtained.

The polymer solution (E1) had a nonvolatile component content of 51.3% by weight, a viscosity of 3360 mPa·s and 3920 ppm (relative to the nonvolatile component content) of remaining 2EHA.

Results of various measurements and assessments regarding the pressure-sensitive adhesive (F1) are shown in Table 7.

### [Comparative Example 2]

According to the same manner as that of Example 1 except that a monomer composition and reaction condition were changed as shown in Table 4 in Example 1, an intermediate polymer solution (D2), a polymer solution (E2), and a pressure-sensitive adhesive (F2) were obtained.

The polymer solution (E2) had a nonvolatile component content of 54.3% by weight, a viscosity of 5580 mPa·s, and 964 ppm (relative to the nonvolatile component content) of remaining 2EHA.

Results of various measurements and assessments regarding the pressure-sensitive adhesive (F2) are shown in Table 7.

### [Comparative Example 3]

A four-neck flask equipped with a thermometer, a stirrer, an inert gas introducing tube, a refluxing condenser and an addition funnel was charged with 175.14 parts of 2EHA, 60.81 parts of VA, 7.3 parts of AA, and 293.1 parts of ethyl acetate as a solvent.

The mixture was stirred under a nitrogen stream, a temperature was retained at 80±2°C, and 0.9 part of peroxide (trade name: BMT-K40 manufactured by NOF Corporation) (hereinafter, abbreviated as BMT-K40) as a polymerization initiator and 16.45 parts of ethyl acetate as a dissolution solvent were added to initiate polymerization.

15 minutes after initiation of a polymerization reaction, a mixture of 262.7 parts of 2EHA, 91.22 parts of VA and 10.95 parts of AA, and an azo-based polymerization initiator solution consisting of 0.36 part of an azo-based polymerization initiator (trade name: ABN-R manufactured by Japan Hydrazine Company, Inc.) and 60.95 parts of ethyl acetate as a dissolution solvent were added dropwise over 90 minutes, respectively, and a polymerization reaction was performed while controlling an inner temperature under refluxing.

90 minutes after completion of addition dropwise, 1/3 of an ABN-R of solution as a booster consisting of 229.8 parts of toluene as a diluting solvent, 1.85 parts of ABN-R and 22.5 parts of ethyl acetate was added, and a remaining booster was added two times every 60 minutes.

Thereafter, a reaction was further performed for 180 minutes, 162.3 parts of toluene as a dilution solvent was added, and this was cooled to obtain a polymer solution (E3).

The polymer solution (E3) had a nonvolatile component content of 36.5% by weight, a viscosity of 6030 mPa·s, and 2890 ppm (relative to the nonvolatile component content) of remaining 2EHA.

1.5 Parts of a polyisocyanate-based crosslinking agent (trade name: Coronate L55E manufactured by Nippon Polyurethane Industry Co., Ltd.) was mixed relative to 100 parts of the nonvolatile component content of the polymer solution (E3) to obtain a pressure-sensitive adhesive (F3).

Results of various measurements and assessments regarding the pressure-sensitive adhesive (F3) are shown in Table 7.

### [Comparative Example 4]

The polymer solution (E3) obtained in Comparative Example 3 was used as a pressure-sensitive adhesive (F4) without adding a polyisocyanate-based crosslinking agent.

Results of various measurements and assessments regarding the pressure-sensitive adhesive (F4) are shown in Table 7.

**Table 1**

| | | B1 | B2 | B3 | B4 |
|---|---|---|---|---|---|
| Initial reaction vessel | Intermediate solution | 60.9 | 60.9 | 60.9 | 60.9 |
| | BA | 82.5 | 82.5 | 82.5 | 82.5 |
| | 2EHA | 89.78 | 89.78 | 89.78 | 89.78 |
| | AA | 7.18 | 7.18 | 7.18 | 7.18 |
| | TEGDA | 0.09 | 0.09 | 0.09 | 0.09 |
| Addition dropwise monomer | Intermediate solution | 142.1 | 142.1 | 142.1 | 142.1 |
| | BA | 162.58 | 162.58 | 162.58 | 162.58 |
| | 2EHA | 209.48 | 209.48 | 209.48 | 209.48 |
| | AA | 16.76 | 16.76 | 16.76 | 16.76 |
| | TEGDA | 0.21 | 0.21 | 0.21 | 0.21 |
| | VA | 29.93 | 29.93 | 29.93 | 29.93 |
| Total monomer | MMA | 14.50 | 14.50 | 14.50 | 14.50 |
| | BA | 35.01 | 35.01 | 35.01 | 35.01 |
| | 2EHA | 42.75 | 42.75 | 42.75 | 42.75 |
| | AA | 3.42 | 3.42 | 3.42 | 3.42 |
| | TEGDA | 0.04 | 0.04 | 0.04 | 0.04 |
| | VA | 4.28 | 4.28 | 4.28 | 4.28 |
| | Total | 100.00 | 100.00 | 100.00 | 100.00 |
| Initiator V-601 | Initial | 0.336 | 0.336 | 0.336 | 0.336 |
| | Addition dropwise | 0.784 | 0.784 | 0.784 | 0.784 |
| | Later addition | 1.68 | 2.24 | 2.24 | 3.36 |
| Addition method | | Every 30 minutes 12 Divisions | Every 30 minutes 12 Divisions | Every 30 minutes 6 Divisions | Every 30 minutes 6 Divisions |
| Reaction time | | 11 hours | 11 hours | 11 hours | 11 hours |
| Viscosity (mPa·s) | | 8220 | 7980 | 8290 | 8670 |
| Nonvolatile component content (%) | | 53.3 | 53.2 | 53.7 | 54.3 |
| Remaining monomer (ppm) | 2EHA | 256 | 140 | 128 | 34 |
| Pressure-sensitive adhesive | | C1 | C2 | C3 | C4 |
| Viscosity of pressure-sensitive adhesive (mPa·s) | | 5120 | 5210 | 4750 | 4840 |

**Table 2**

| | | B5 | B6 | B7 |
|---|---|---|---|---|
| Initial reaction vessel | Intermediate solution | 60.9 | 60.9 | 60.9 |
| | BA | 34.46 | 34.46 | 34.46 |
| | 2EHA | 137.82 | 137.82 | 136.02 |
| | AA | 7.18 | 7.18 | 8.98 |
| | TEGDA | 0.09 | 0.09 | 0.09 |
| Addition dropwise monomer | Intermediate solution | 142.1 | 142.1 | 142.1 |
| | BA | 210.63 | 226.79 | 220.8 |
| | 2EHA | 161.43 | 161.43 | 163.23 |
| | AA | 16.76 | 16.76 | 20.95 |
| | TEGDA | 0.21 | 0.21 | 0.21 |
| | VA | 29.93 | 13.77 | 13.77 |
| Total monomer | MMA | 14.50 | 14.50 | 14.50 |
| | BA | 35.01 | 37.32 | 36.46 |
| | 2EHA | 42.75 | 42.75 | 42.75 |
| | AA | 3.42 | 3.42 | 4.28 |
| | TEGDA | 0.04 | 0.04 | 0.04 |
| | VA | 4.28 | 1.97 | 1.97 |
| | Total | 100.00 | 100.00 | 100.00 |
| Initiator V-601 | Initial | 0.336 | 0.336 | 0.336 |
| | Addition dropwise | 0.784 | 0.784 | 0.784 |
| | Later addition | 2.24 | 3.36 | 3.36 |
| Addition method | | Every 30 minutes 12 Divisions | Every 10 minutes 36 Divisions | Every 10 minutes 36 Divisions |
| Reaction time | | 11 hours | 11 hours | 11 hours |
| Viscosity (mPa·s) | | 7960 | 7180 | 6170 |
| Nonvolatile component content (%) | | 53.2 | 53.7 | 52.8 |
| Remaining monomer (ppm) | 2EHA | 106 | 346 | 424 |
| Pressure-sensitive adhesive | | C5 | C6 | C7 |
| Viscosity of pressure-sensitive adhesive (mPa·s) | | 5370 | 3790 | 4320 |

**Table 3**

| | | B8 | B9 | B10 | B11 | B12 | B13 |
|---|---|---|---|---|---|---|---|
| Initial reaction vessel | Intermediate solution | 60.9 | 60.9 | 60.9 | 60.9 | 60.9 | 60.9 |
| | BA | 33.63 | 15.68 | 15.8 | 27.68 | 27.68 | 29.72 |
| | 2EHA | 132.00 | 132.00 | 132.00 | 120.00 | 120.00 | 100.00 |
| | NVP | 13.83 | 13.83 | 13.83 | 13.83 | 13.83 | 13.83 |
| | TEGDA | 0.09 | 0.09 | 0.09 | 0.09 | 0.09 | 0.09 |
| | Hydrophilic monomer | 0 | 17.96 Note 1 | 17.96 Note 2 | 17.96 Note 3 | 17.96 Note 4 | 35.91 Note 2 |
| Addition dropwise monomer | Intermediate solution | 142.1 | 142.1 | 142.1 | 142.1 | 142.1 | 142.1 |
| | BA | 235.40 | 193.50 | 193.50 | 181.50 | 181.50 | 239.31 |
| | 2EHA | 137.33 | 137.33 | 137.33 | 149.33 | 149.33 | 49.63 |
| | NVP | 32.26 | 32.26 | 32.26 | 32.26 | 32.26 | 32.26 |
| | TEGDA | 0.21 | 0.21 | 0.21 | 0.21 | 0.21 | 0.21 |
| | VA | 13.77 | 13.77 | 13.77 | 13.77 | 13.77 | 13.77 |
| | Hydrophilic monomer | 0 | 41.90 Note 1 | 41.90 Note 2 | 41.90 Note 3 | 41.90 Note 4 | 83.79 Note 2 |
| Total monomer | MMA | 14.50 | 14.50 | 14.50 | 14.50 | 14.50 | 14.50 |
| | BA | 38.43 | 29.88 | 29.88 | 29.88 | 29.88 | 38.43 |
| | 2EHA | 38.48 | 38.48 | 38.48 | 38.48 | 38.48 | 21.38 |
| | NVP | 6.58 | 6.58 | 6.58 | 6.58 | 6.58 | 6.58 |
| | TEGDA | 0.04 | 0.04 | 0.04 | 0.04 | 0.04 | 0.04 |
| | VA | 1.97 | 1.97 | 1.97 | 1.97 | 1.97 | 1.97 |
| | Hydrophilic monomer | 0 | 8.55 Note 1 | 8.55 Note 2 | 8.55 Note 3 | 8.55 Note 4 | 17.10 Note 2 |
| | Total | 100.00 | 100.00 | 100.00 | 100.00 | 100.00 | 100.00 |
| Initiator V-601 | Initial | 0.336 | 0.336 | 0.336 | 0.336 | 0.336 | 0.336 |
| | Addition dropwise | 0.784 | 0.784 | 0.784 | 0.784 | 0.784 | 0.784 |
| | Later addition | 3.36 | 3.36 | 3.36 | 3.36 | 3.36 | 3.36 |
| Addition method | | Every 30 minutes 12 Divisions | Every 15 minutes 12 Divisions | Every 15 minutes 12 Divisions | Every 15 minutes 12 Divisions | Every 15 minutes 12 Divisions | Every 15 minutes 12 Divisions |
| Reaction time | | 11 hours | 11 hours | 11 hours | 11 hours | 11 hours | 11 hours |
| Viscosity (mPa·s) | | 5520 | 5380 | 4340 | 5920 | 6510 | 13800 |
| Nonvolatile component content (%) | | 53.1 | 53.5 | 54.0 | 54.3 | 53.9 | 53.7 |
| Remaining monomer (ppm) | 2EHA | 59 | 66 | 70 | 62 | 70 | 78 |
| Pressure-sensitive adhesive | | C8 | C9 | C10 | C11 | C12 | C13 |
| Viscosity of pressure-sensitive adhesive (mPa·s) | | 3300 | 3510 | 2690 | 3910 | 4220 | 8200 |

| | | | | | | | |
|---|---|---|---|---|---|---|---|
| Note 1: methoxytriethylene glycol acrylate, | | | | | | | |
| Note 2: methoxypolyethylene glycol methacrylate, | | | | | | | |
| Note 3: ethoxydiethylene glycol acrylate, | | | | | | | |
| Note 4: methoxypolyethylene glycol acrylate | | | | | | | |

**Table 4**

| | | E1 | E2 | E3 |
|---|---|---|---|---|
| Initial reaction vessel | Intermediate solution | 60.9 | 60.9 | - |
| | BA | 44.8 | 44.8 | - |
| | 2EHA | 125.7 | 125.7 | 175.14 |
| | AA | 8.98 | 8.98 | 7.3 |
| | TEGDA | 0.09 | 0.09 | - |
| | VA | - | - | 60.81 |
| Addition dropwise monomer | Intermediate solution | 142.1 | 142.1 | - |
| | BA | 104.53 | 104.53 | - |
| | 2EHA | 293.25 | 293.25 | 252.7 |
| | AA | 20.95 | 20.95 | 10.95 |
| | TEGDA | 0.21 | 0.21 | - |
| | VA | - | - | 91.22 |
| Total monomer | MMA | 14.50 | 14.50 | - |
| | BA | 21.33 | 21.33 | - |
| | 2EHA | 59.85 | 59.85 | 72.0 |
| | AA | 4.28 | 4.28 | 3.0 |
| | TEGDA | 0.04 | 0.04 | - |
| | VA | - | - | 25.0 |
| | Total | 100.00 | 100.00 | 100.0 |
| Initiator V-601 | Initial | 0.336 | 0.336 | BMT-K40 0.9 |
| | Addition dropwise | 0.784 | 0.784 | ABN-R 0.36 |
| | Later addition | 1.12 | 2.24 | ABN-R 1.85 |
| Addition method | | Every 30 minutes 4 Divisions | Every 30 minutes 12 Divisions | Every 60 minutes 3 Divisions |
| Reaction time | | 7 hours | 11 hours | 8 hours |
| Viscosity (mPa·s) | | 3360 | 5580 | 6030 |
| Nonvolatile component content (%) | | 51.3 | 54.3 | 36.5 |
| Remaining monomer (ppm) | 2EHA | 3920 | 964 | 2890 |
| Pressure-sensitive adhesive | | F1 | F2 | F3 |
| Viscosity of pressure-sensitive adhesive (mPa·s) | | 1770 | 3240 | 6030 |

**Table 5**

| | Example 1 | Example 2 | Example 3 | Example 4 | Example 5 | Example 6 |
|---|---|---|---|---|---|---|
| Pressure-sensitive adhesive | C1 | C2 | C3 | C4 | C5 | C6 |
| Initial adhesive strength (N/cm) | 4.3 | 4.4 | 4.2 | 4.2 | 4.4 | 4.2 |
| Holding power (hr) | 8.5 | 9.1 | 8.0 | 7.3 | 12.0 | 11.3 |
| Ball tack | 4 | 4 | 4 | 4 | 5 | 5 |
| Adhesion property to skin | 3.9 | 3.7 | 3.8 | 3.8 | 3.9 | 4.0 |
| Skin stimulating property | 3.9 | 4.0 | 4.0 | 4.0 | 4.0 | 3.8 |
| Paste remaining property | 3.8 | 3.6 | 3.8 | 3.8 | 3.9 | 3.8 |
| Remaining 2EHA (ppm) | 106 | 45 | 58 | 28 | 45 | 141 |

**Table 6**

| | Example 7 | Example 8 | Example 9 | Example 10 | Example 11 | Example 12 | Example 13 |
|---|---|---|---|---|---|---|---|
| Pressure-sensitive adhesive | C7 | C8 | C9 | C10 | C11 | C12 | C13 |
| Initial adhesive strength (N/cm) | 4.3 | 5.2 | 6.1 | 7.0 | 4.2 | 4.5 | 6.0 |
| Holding power (hr) | 16.0 | 7.0 | 13.7 | 6.9 | 5.2 | 4.6 | 1.7 |
| Ball tack | 4 | 8 | 9 | 9 | 10 | 10 | 11 |
| Adhesion property to skin | 4.0 | 3.9 | 4.0 | 4.0 | 4.0 | 4.0 | 4.0 |
| Skin stimulating property | 3.7 | 4.0 | 4.0 | 4.0 | 4.0 | 4.0 | 4.0 |
| Paste remaining property | 3.9 | 3.9 | 4.0 | 3.8 | 3.8 | 3.6 | 3.6 |
| Remaining 2EHA (ppm) | 180 | 15 | 17 | 18 | 20 | 23 | 25 |
| Moisture permeability (g/m²·24h) | 277 | 335 | 420 | 463 | 401 | 435 | 634 |

**Table 7**

| | Comparative Example 1 | Comparative Example 2 | Comparative Example 3 | Comparative Example 4 |
|---|---|---|---|---|
| Pressure-sensitive adhesive | F1 | F2 | F3 | F4 |
| Initial adhesive strength (N/cm) | 4.0 | 4.1 | 2.8 | 7.8 Note 1 |
| Holding power (hr) | 8.2 | 9.5 | 0.2 Note 2 | 0.1 |
| Ball tack | 4 | 4 | 5 | 11 |
| Adhesion property to skin | 3.8 | 3.7 | 3.1 | 1.5 |
| Skin stimulating property | 2.2 | 2.8 | 2.6 | 2.5 |
| Paste remaining property | 3.6 | 3.7 | 3.8 | 1.2 |
| Remaining 2EHA (ppm) | 2184 | 520 | 780 | 810 |
| Moisture permeability (g/m²·24h) | - | - | 303 | - |

| | | | | |
|---|---|---|---|---|
| Note 1: Cohesive failure | | | | |
| Note 2: Unit is mm | | | | |

### INDUSTRIAL APPLICATION

The acrylic block copolymer of the present invention is a polymer which is extremely useful for a pressure-sensitive adhesive layer of a pressure-sensitive adhesive material (pressure-sensitive adhesive tape and pressure-sensitive adhesive sheet) to skin such as an adhesive plaster and a surgical tape, and, from this polymer, there can be prepared a pressure-sensitive adhesive (containing the above polymer) for pressure-sensitive adhesion to skin, or this pressure-sensitive adhesive can be used to prepare a pressure-sensitive adhesive material to skin.

Various details of the invention may be changed without departing from its spirit not its scope. Furthermore, the foregoing description of the preferred embodiments according to the present invention is provided for the purpose of illustration only, and not for the purpose of limiting the invention as defined by the appended claims and their equivalents.

## Claims

1. An acrylic block copolymer, obtained by polymerizing a polymerizable monomer in the presence oftri- or more-functional polyvalent mercaptan, wherein 50 to 100% by weight of a total structural unit of the polymer part is a (meth)acrylic acid alkyl ester structural unit of a carbon number of 7 to 17,
wherein an amount of remaining (meth)acrylic acid alkyl ester of a carbon number of 7 to 17 is 900 ppm or less relative to the total nonvolatile component content.

2. A acrylic block copolymer, in which: a plurality of star-shaped structures in which at least three chain polymer parts are radically extended around a mercapto group are connected to each other via a chain polymer part, and 50 to 100% by weight of a total structural unit of the polymer part is a (meth)acrylic acid alkyl ester structural unit of a carbon number of 7 to 17,
wherein an amount of remaining (meth)acrylic acid alkyl ester of a carbon number of 7 to 17 is 900 ppm or less relative to the total nonvolatile component content.

3. The acrylic block copolymer according to claim 1 or 2, wherein said block copolymer is obtained by performing multiple stage radical polymerization of a polymerizable monomer in the presence of polyvalent mercapto, 50 to 100% by weight of a total use amount of the polymerizable monomer is (meth)acrylic acid alkyl ester of a carbon number of 7 to 17, and a polyfunctional monomer is used in at least one single stage in the multiple stages.

4. A pressure-sensitive adhesive for pressure-sensitive adhesion to skin, comprising an acrylic block copolymer as defined in any one of claims 1 to 3.

5. A pressure-sensitive adhesive material to skin, in which a pressure-sensitive adhesive layer is provided on a tape-like or sheet-like substrate,
wherein the pressure-sensitive adhesive layer is formed using a pressure-sensitive adhesive for pressure-sensitive adhesion to skin as defined in claim 4.

6. The pressure-sensitive adhesive material to skin according to claim 5,
wherein an amount of remaining (meth)acrylic acid alkyl ester of a carbon number of 7 to 17 in the pressure-sensitive adhesive layer is 500 ppm or less relative to the total nonvolatile component content.
